# EUROPEAN PATENT APPLICATION

(11) **EP 1 216 889 A2**
(43) Date of publication of application: **26.06.2002**
(21) Application number: 01500259.5
(22) Date of filing: 30.10.2001
(51) Int. Cl.: B60R 16/02

(54) **Device for disconnecting the battery on a vehicle**

(30) Priority: 20.12.2000 ES 200003139
(71) Applicant: Cables Perti, S.A., 08040 Barcelona (ES)
(72) Inventor: Saenz De Zaitigui Lopez, Cecilio, 08029 Barcelona (ES)
(74) Representative: Ponti Sales, Adelaida

(57) **Abstract**

It includes a power-supply block (1) for the electronics making up the device, and a block (2) for detection of an incident undergone by the vehicle, and is characterised in that it further comprises a block (3) for processing the signal from the block (2) for detecting an incident, and activation block (4) for disconnecting the battery (BAT) in the event of such an incident, a block (5) to indicate the status of the device, and a block (6) for resetting the device.

Disconnection of the battery is achieved in situations such as fire, short circuit, collision or when any other signal is received from the exterior.

## Description

This invention relates to a device for disconnecting the battery on a vehicle in situations such as fire, overturning, short circuit, collision or sundry external signals, so as to increase the safety of its occupants and of the vehicle itself by reducing the risk involved in a live source of electrical current.

### BACKGROUND OF THE INVENTION

Known in the art are devices for disconnecting the battery of a vehicle which comprise a power-supply block for the electronics making up the device, and a block for detecting an incident the vehicle might suffer.

One such device is based on a mechanical disconnection device. Said device, in the event of a situation such as a collision, receives an external electrical signal that normally come from the airbag of the vehicle when it is triggered, which produces an explosion from a small pyrotechnic charge, leading to the separation of two metallic bodies and thereby preventing electrical current passing to the battery.

Said devices have the disadvantage that they can only be used in situations such as collisions, as collision is one of the few situations in which the airbag triggers.

Furthermore, such devices cannot be activated and/or deactivated manually, which means that once the device has been activated it is not possible to reset it, and thus the vehicle is left immobilised.

Moreover, such devices do not have an input for an external current, so that the cannot be controlled externally either for powering them or for checking them.

Another noteworthy disadvantage is that they are not electronic devices, so that putting them into the installations of current vehicles is much more costly.

### DESCRIPTION OF THE INVENTION

The device of the invention overcomes the aforesaid disadvantages, while providing other advantages which will be described.

The device for disconnecting the battery on a vehicle is characterised in that it includes a block for processing the signal coming from the block for detecting an incident, an activation block for disconnecting the battery in the event of such an incident, a block for indicating the status of the device and a block for resetting the device.

A device is achieved thereby for disconnecting the battery on a vehicle in situations such as fire, short circuit, collision or in the event of any other signal coming from the exterior. Furthermore, said device can be activated and deactivated at will, so that in the event of activation of the device it is possible to reset it, thereby avoiding the vehicle being left immobilised.

It is also a totally electronic device, so that it can clearly be fitted to any current vehicle and further permits centralised control of the device.

Preferably, the block for detecting an incident suffered by the vehicle includes at least one accelerometer for detecting a collision.

The optimum configuration is provided by utilisation of one accelerometer for each of the axes (X, Y, Z), so that detection of a collision is faster and surer, increasing the efficacy of activation upon detection.

The block for detecting an incident suffered by the vehicle includes a block for managing the signal coming from at least one accelerometer, such as an OR gate.

Said OR gate receives the signals from each of the accelerometers and provides a resulting signal at its output, rendering it suitable for subsequent processing.

This at least one accelerometer is mounted on the outside of the device.

This makes the accelerometer truly effective.

Advantageously, said at least one accelerometer is of open configuration.

Thus, in the event of collision, the contact is closed and a 0 is sent to the following block.

Preferably, the block for detecting the incident comprises at least one bimetal mounted on the outside of the vehicle in order to detect fire on the vehicle.

Thus, a fire on the vehicle is detected effectively.

Said at least one bimetal is of closed configuration.

In the event of fire, the bimetal will cease to deliver a 1, and a 0 will arrive at the following block.

According to one feature of the invention, the block for registering an incident comprises a MOSFET transistor for detecting a short circuit in the electrical installation of the vehicle.

This configuration permits detection of the voltage drop which occurs between the drain and source when there is an increase of the current circulating between them.

The block for detecting the incident suffered by the vehicle comprises at least one verticality sensor for detecting overturning of the vehicle.

Said verticality sensor must present a preestablished angle margin.

Also advantageously, the electronics power-supply block making up the device comprises a capacitor connected in parallel with the battery of the vehicle, and a diode.

In the event of short circuit and voltage drop at the battery of the vehicle, the capacitor avoids the device being left without power supply and being unable to disconnect the battery. The discharge from the capacitor powers the activation block for a few moments, which is sufficient time for the device to operate and disconnect the battery.

The diode is necessary in a situation such as that described in the preceding paragraph in order to prevent the capacitor discharging through the battery.

According to another feature of the invention, the block for processing the signal from the block for detecting an incident comprises an inverter block and a recording block, in the event of collision or fire.

The inverter block is for inverting the signal, which signal will subsequently be sent to the recording block, which recording block will deliver the signal necessary for the activation block of the device to disconnect the battery.

Said inverter block is a "Trigger-Smith" inverter gate.

Advantageously, the block for processing the signal coming from the block for detecting an incident comprises a low-pass filter and a timing block, in the event of overturning.

In this way, the low-pass filter permits elimination of possible rebounds, while the timer is necessary in order to prevent false detections caused by the poor state of the road surface over which the vehicle is travelling.

The activation block includes a block for controlling the device on the basis of the signal received from the block for processing an incident, and a MOSFET transistor.

The MOSFET transistor is used as a switch for disconnecting the battery, so that there must be a distinction between the ON state (current circulating between drain and source of the transistor) and the OFF state (circulation of current between drain and source of the transistor interrupted and disconnection of the battering occurring).

The block for indicating the status of the device comprises a light-emitting diode to indicate the state of conduction, a light-emitting diode to indicate the status of the device in the event of fire, a light-emitting diode to indicate activation of the device in the event of collision, and a light-emitting diode to indicate activation in the event of short circuit.

### BRIEF DESCRIPTION OF THE DRAWINGS

For a better understanding of all that has been set out, some drawings are attached which show, schematically and solely by way of non-restrictive example, a practical case of embodiment.

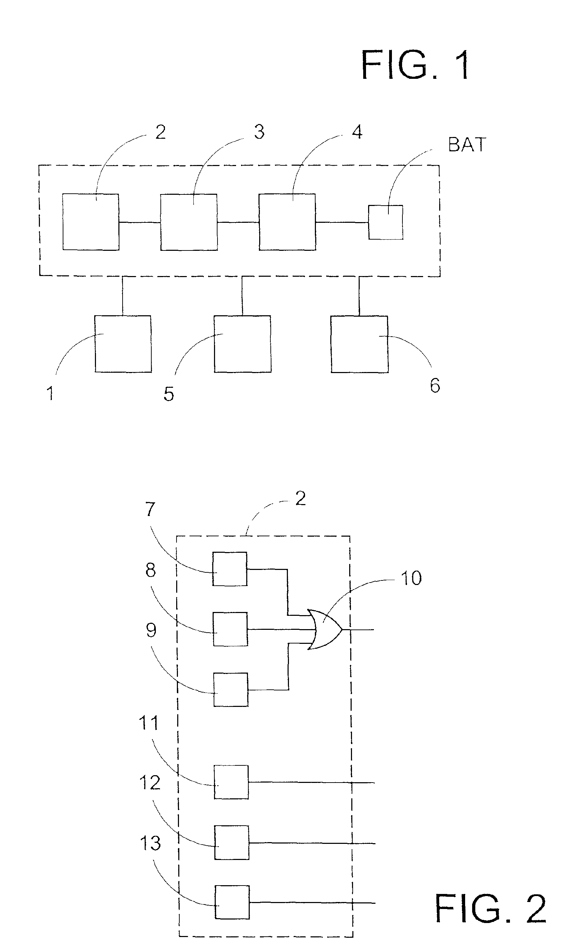

In said drawings, figure 1 is a block diagram of the device of the invention for disconnecting the battery on a vehicle;
Figure 2 is a block diagram of the block for detecting an incident suffered by the vehicle, being part of the diagram of figure 1;
Figure 3 is a block diagram of the block for processing the signal coming from the detecting block of figure 2; and
Figure 4 is a block diagram of the block for activation of the battery of the vehicle.

### DESCRIPTION OF A PREFERRED EMBODIMENT

As figure 1 shows, the device for disconnecting the battery BAT on a vehicle comprises a block 1 for power supply of the electronics making up the device, a block for detecting an incident suffered by the vehicle, a block 3 for processing the signal coming from the block for detecting an incident 2, an activation block 4 for disconnecting the battery BAT in the event of any such incident, a block 5 for indicating the status of the device, and a block 6 for resetting the device.

The block 1 for supplying power to the electronics making up the device comprises a capacitor connected in parallel with the battery BAT of the vehicle, and a diode.

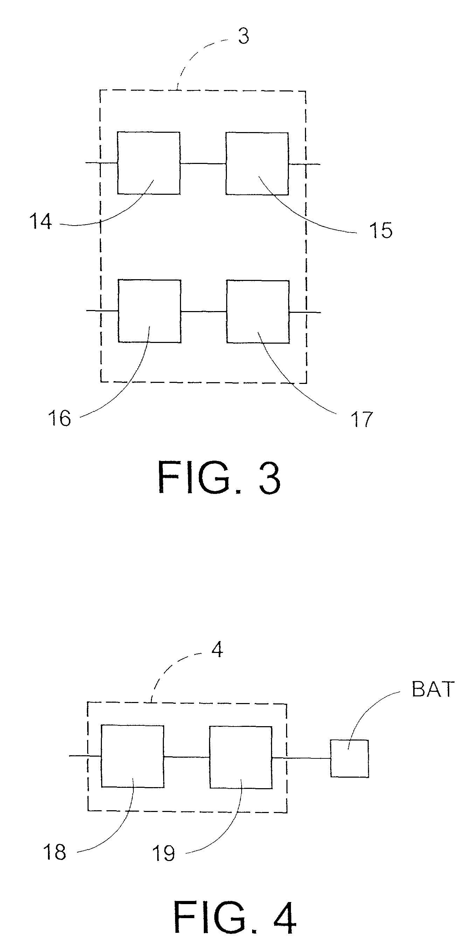

Figure 2 shows that the block 2 for detecting an incident suffered by the vehicle comprises an accelerometer block 7 for the X axis, and accelerometer block 8 for the Y axis, an accelerometer block 9 for the Z axis, an OR gate 10 which receives the signals from the accelerometer blocks 7, 8 and 9, said blocks forming a collision detector; a block 11 of at least one bimetal for detecting a fire in the vehicle; a block 12 of a MOSFET transistor for detecting a short circuit in the electrical installation of the vehicle; and a block 13 of a verticality sensor for detecting overturning of the vehicle.

Figure 3 shows how the block 3 for processing the signal coming from the detecting block 2 comprises an inverter block 14, such as a Trigger-Smith, which receives the signals from blocks 10 and 11; a recording block 15 connected to the inverter block 14; and a low-pass filter block 16 which receives the signal from block 13, and a timing block 17, connected to block 16.

Figure 4 shows the activation block 4, which comprises a block 18 for controlling the device on the basis of the signal received from the block 3 for processing the signal coming from block 2, the signal coming from block 12, and the signal coming from block 17; and a block 19 of a MOSFET transistor, which acts on the battery BAT.

The block 5 for indicating the status of the device comprises a light-emitting diode for indicating the conduction status, a light-emitting diode for indicating activation of the device in the event of fire, a light-emitting diode for indicating activation of the device in the event of collision, a light-emitting diode for indicating activation in the event of short circuit, and a light-emitting diode for indicating activation in the event of overturning of the vehicle.

The resetting block 6 is suitable for activating or deactivating the device at will, so that in the event of activation of the device it is possible to reset it, thus avoiding the vehicle being left immobilised.

The operation of the device object of the invention is thus as follows.

The block for power supply 1 powers all the electronic circuits of the device through the capacitor and the diode mentioned above. The capacitor enables that, in the event of short circuit and voltage drop in the battery, the device is not left without power supply and the and unable to carry out the disconnection of the battery BAT. The discharge from the capacitor provides power for a few instants to the activation block 4, for sufficient time for the device to activate and disconnect the battery.

In the event of collision, given that the accelerometers 7, 8 and 9 are of open configuration, said accelerometers detect and send a 0 signal to the OR gate 10, which provides a 0 at its output. Said signal is sent to the inverter block 14, which provides a 1 signal at its output, which signal is maintained by the recording block 15, thus providing the necessary signal to the control block 18 of the device so that the MOSFET transistor block 19 disconnects the battery BAT. Said MOSFET is used as a switch, so that a distinction has to be made between the ON state (exists current circulating between drain and source of the transistor) and the OFF state (circulation of current between drain and source of the transistor is interrupted and disconnection of the battery occurs).

In the event of fire, the block 11 of at least of one bimetal, which is of closed configuration, opens the contact and ceases to deliver a 1, a 0 arriving at the input of the inverter block 14. At the output from said block 14 a 1 is provided, which is hold by the recording block 15, providing the necessary signal to the control block 18 so that it acts on the MOSFET block 19 and that block passes to its OFF state, thus causing disconnection of the battery BAT.

In the event of short circuit, the MOSFET transistor block 12 detects the voltage drop that occurs between drain and source due to an increase in the current circulating between them. In this way, it acts directly on the control block 18 which changes block 19 to OFF state, thereby causing disconnection of the battery.

In the event of overturning of the vehicle, the verticality sensor block 13 detects this incident and gives the signal to the low-pass filter block 16, which eliminates possible rebounds, and to the timing block 17 in order to prevent false detections caused by the poor state of the road surface over which the vehicle is travelling. Said block 17 gives the signal to the control block 18, which acts on the MOSFET transistor block 19 and causes it to change to OFF state, with disconnection of the battery BAT occurring.

Whatever the incident that arises on the vehicle, the block 5 shows the status of the device by means of the light-emitting diodes it has.

Even though reference has been made to specific embodiments of the invention, it will be obvious to a person skilled in the art that the device described allows many variations and modifications, and that all the details mentioned could be replaced by others that are technically equivalent, without departing from the scope of protection defined in the attached claims.

## Claims

1. Device for disconnecting the battery (BAT) on a vehicle, which device comprises a block (1) for powering the electronics that make up the device, and a block (2) for detecting an incident suffered by the vehicle, **characterised in that** it further comprises a block (3) for processing the signal coming from the block for detecting an incident (2), an activation block (4) for disconnecting the battery (BAT) in the event of such an incident, a block (5) to indicate the status of the device, and a block (6) for resetting the device.

2. Device as claimed in claim 1, **characterised in that** the block (2) for detecting an incident suffered by the vehicle comprises at least one accelerometer (7, 8, 9) for detecting a collision.

3. Device as claimed in claim 2, **characterised in that** the block (2) for detecting an incident suffered by the vehicle comprises a block (10) for managing the signal coming from at least one accelerometer (7, 8, 9).

4. Device as claimed in claim 3, **characterised in that** the block for managing the signal coming from at least one accelerometer is an OR gate (10).

5. Device as claimed in any of claims 2 to 4, **characterised in that** at least one accelerometer (7, 8, 9) is mounted on the outside of the device.

6. Device as claimed in any of claims 2 to 5, **characterised in that** said at least one accelerometer (7, 8, 9) is of open configuration.

7. Device as claimed in any of the preceding claims, **characterised in that** the block (2) for detecting the incident comprises at least one bimetal (11) for detecting a fire in the vehicle.

8. Device as claimed in claim 7, **characterised in that** said at least one bimetal (11) is mounted on the outside of the device.

9. Device as claimed in claims 7 or 8, **characterised in that** said at least one bimetal (11) is of closed configuration.

10. Device as claimed in any of the preceding claims, **characterised in that** the block (2) for detecting an incident comprises a MOSFET transistor (12) for detecting a short circuit in the electrical installation of the vehicle.

11. Device as claimed in any of the preceding claims, **characterised in that** the block (2) for detecting an incident suffered by the vehicle comprises at least one verticality sensor (13) for detecting overturning of the vehicle.

12. Device as claimed in claim 1, **characterised in that** the electronics power-supply block (1) making up the device comprises a capacitor connected in parallel with the battery of the vehicle and a diode.

13. Device as claimed in claim 1, **characterised in that** the block (3) for processing the signal from the block (2) for detecting an incident comprises an inverter block (14) and a recording block(15), in the event of collision, fire or external signal.

14. Device as claimed in claim 12, **characterised in that** the inverter block is a "Trigger-Smith" inverter gate (14).

15. Device as claimed in claim 1, **characterised in that** the block (3) for processing the signal from the block (2) for detecting an incident comprises a low-pass filter and a timing block, in the event of overturning.

16. Device as claimed in claim 1, **characterised in that** the activation block (4) comprises a block (18) for controlling the device on the basis of the signal received from the block (2) for detecting an incident, and a MOSFET transistor (19).

17. Device as claimed in claim 1, **characterised in that** the block (5) for indicating the status of the device comprises a light-emitting diode to indicate the state of conduction, a light-emitting diode to indicate the status of the device in the event of fire, a light-emitting diode to indicate activation of the device in the event of collision, and a light-emitting diode to indicate activation in the event of short circuit.
